# EUROPEAN PATENT SPECIFICATION

(11) **EP 3 916 530 B1**
(45) Date of publication and mention of the grant of the patent: **10.12.2025**
(21) Application number: 21176318.0
(22) Date of filing: 27.05.2021
(51) Int. Cl.: G06F 3/0481

(54) **METHOD OF SEARCHING FOR OBJECT FOR EXECUTING AUTOMATION SCENARIO AND APPARATUS FOR PERFORMING THE METHOD**
VERFAHREN ZUM SUCHEN EINES OBJEKTS ZUR AUSFÜHRUNG EINES AUTOMATISIERUNGSSZENARIOS UND VORRICHTUNG ZUR DURCHFÜHRUNG DES VERFAHRENS
PROCÉDÉ DE RECHERCHE D'OBJET POUR L'EXÉCUTION DE SCÉNARIO D'AUTOMATISATION ET APPAREIL PERMETTANT DE METTRE EN OEUVRE LE PROCÉDÉ

(30) Priority: 27.05.2020 KR 20200063556
(43) Date of publication of application: 01.12.2021
(73) Proprietor: Samsung SDS Co., Ltd., Seoul 05510 (KR)
(72) Inventor: LEE, Jae Cheol, Seoul 05510 (KR); PARK, Koo Hyun, Seoul 05510 (KR); LEE, Seung Woo, Seoul 05510 (KR); KIM, I Sac, Seoul 05510 (KR)
(74) Representative: Grünecker Patent- und Rechtsanwälte PartG mbB

(56) References cited:
- US-A1- 2004 194 065
- US-A1- 2020 073 686
- WALIA GURJIT SINGH ET AL: "Recent advances on multicue object tracking: a survey", ARTIFICIAL INTELLIGENCE REVIEW, SPRINGER NETHERLANDS, NL, vol. 46, no. 1, 9 January 2016 (2016-01-09), pages 1 - 39, XP035898694, ISSN: 0269-2821, [retrieved on 20160109], DOI: 10.1007/S10462-015-9454-6

## Description

### BACKGROUND

### 1. Field

The following description relate to automation scenario execution.

### 2. Description of Related Art

In recent years, as computer-based work has become more common, many companies are making various attempts to enable personal computers (PCs) to autonomously perform at least simple repetitive tasks in order to improve work efficiency.

Among these attempts, robotic process automation (RPA) has been in the spotlight. RPA enables a user to create an automation scenario by recording activities to perform simple repetitive tasks on a user interface (UI) of a computer and a software robot executes the created automation, thereby achieving task automation.

However, the UI of the user's computer may be frequently changed as the resolution or display settings are changed, and in this case, the conventional RPA requires a developer to change the automation scenario due to failure in object search and accordingly stop the execution of the automation scenario, thereby increasing the time required to automate tasks.

In addition, according to the conventional RPA, in order to change an automation scenario, an analysis of causes of errors resulting in failure in object search must be preceded. At this time, a new error may occur as the analysis of causes of errors is incorrect.
US 2020/073686 A1 discloses a method for real-time remediation of a software script. Said method includes, during execution of the software script, attempting to identify a first user interface (UI) object. In response to failing to identify the first UI object, similarity scores are calculated based on the data of the plurality of UI objects and historical data associated with the first UI object. Hereby, calculating the similarity scores is performed using one of edit distance, Cosine similarity, semantic-based similarity, or a machine learning model that predicts similarity based on object features. Based on the calculated similarity scores, a second UI object is identified from the plurality of UI objects. Finally, the script and/or an object repository referenced by the script are then automatically modified so that subsequent execution of the script includes attempting to identify the second UI object instead of the first UI object.
It is the object of the present invention to provide an apparatus and a method that allows quickly and efficiently executing an automation scenario.
This object is solved by the subject matter of the independent claims.
Preferred embodiments are defined in the dependent claims.

This summary is provided to introduce a selection of concepts in a simplified form that are further described below in the Detailed Description.
The present invention is defined by the appended claims.

The disclosed embodiments are intended to provide an object search means for quickly executing an automation scenario.

In one general aspect, there is provided a method of searching for an object for executing an automation scenario, which is performed by a computing device including one or more processors and a memory in which one or more programs to be executed by the one or more processors are stored, the method including searching for a target object based on search information including a plurality of search conditions for the target object that is a target for which an event is to be executed according to an automation scenario, searching for a similar object for the target object based on some of the plurality of search conditions when the target object is not found, and executing the event on the similar object when the similar object is successfully found.

The plurality of search conditions includes a plurality of attributes to be used for searching for the target object, attribute values of each of the plurality of attributes, and weights for each of the plurality of attributes.

The searching for the similar object includes generating a plurality of attribute combinations including some of the plurality of attributes, calculating weighted sums for each of the plurality of attribute combinations by summing the weights for each of the plurality of attribute combinations, and searching for the similar object based on the plurality of attribute combinations and the weighted sums. or more attribute combinations for which the weighted sum is greater than or equal to a preset threshold value and searching for the similar object based on the one or more attribute combinations.

The searching for the similar object based on the one or more attribute combinations includes searching for the similar object based on the one or more attribute combinations in descending order of the weighted sums for each of the one or more attribute combinations, and determining that the similar object has been successfully found and terminating the search when a single similar object is found based on an attribute combination corresponding to a certain order among the one or more attribute combinations.

The method may further include updating the plurality of search conditions when the similar object is successfully found.

The updating may include updating weights for each of a plurality of attributes to be used for searching for the target object.

The updating may include updating, among the attribute values of each of the plurality of attributes for the target object, a weight for an attribute having an attribute value that matches an attribute value of each of a plurality of attributes for the similar object.

In another general aspect, there is provided an apparatus for performing a method of searching for an object for executing an automation scenario, the apparatus including one or more processors and a memory storing one or more programs configured to be executed by the one or more processors, wherein the programs include commands for searching for a target object based on search information including a plurality of search conditions for the target object that is a target for which an event is to be executed according to an automation scenario, searching for a similar object for the target object based on some of the plurality of search conditions when the target object is not found, and executing the event on the similar object when the similar object is successfully found.

The plurality of search conditions includes a plurality of attributes to be used for searching for the target object, attribute values of each of the plurality of attributes, and weights for each of the plurality of attributes.

The searching for the similar object includes generating a plurality of attribute combinations including some of the plurality of attributes, calculating weighted sums for each of the plurality of attribute combinations by summing the weights for each of the plurality of attribute combinations, and searching for the similar object based on the plurality of attribute combinations and the weighted sums.

The searching for the similar object based on the plurality of attribute combinations and the weighted sum includes classifying, from among the plurality of attribute combinations, one or more attribute combinations for which the weighted sum is greater than or equal to a preset threshold value and searching for the similar object based on the one or more attribute combinations.

The searching for the similar object based on the one or more attribute combinations may include searching for the similar object based on the one or more attribute combinations in descending order of the weighted sums for each of the one or more attribute combinations, and determining that the similar object has been successfully found and terminating the search when a single similar object is found based on an attribute combination corresponding to a certain order among the one or more attribute combinations.

The program may further include commands for updating the plurality of search conditions when the similar object is successfully found.

The updating may include updating weights for each of a plurality of attributes to be used for searching for the target object.

The updating may include updating, among the attribute values of each of the plurality of attributes for the target object, a weight for an attribute having an attribute value that matches an attribute value of each of a plurality of attributes for the similar object.

Other features and aspects will be apparent from the following detailed description, the drawings, and the claims.

### BRIEF DESCRIPTION OF THE DRAWINGS

FIG. 1 is a block diagram illustrating an example of a computing environment including a computing device suitable for use in example embodiments.
FIG. 2 is a flowchart illustrating a method of searching for an object for executing an automation scenario according to an exemplary embodiment.
FIG. 3 is a flowchart for describing in detail an operation of searching for a similar object according to an exemplary embodiment.
FIG. 4 is a flowchart for describing in detail an operation of searching for a similar object based on an attribute combination and the weighted sum according to an exemplary embodiment.
FIG. 5 is a flowchart for describing in detail an operation of searching for a similar object based on one or more selected attribute combinations according to an exemplary embodiment.
FIG. 6 is an exemplary diagram for describing an attribute combination generated according to an exemplary embodiment.
FIG. 7 is a flowchart illustrating a method of searching for an object for executing an automation scenario according to an additional embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein.

Descriptions of well-known functions and constructions may be omitted for increased clarity and conciseness. Also, terms described in below are selected by considering functions in the embodiment and meanings may vary depending on, for example, a user or operator's intentions or customs. Therefore, definitions of the terms should be made based on the overall context. The terminology used in the detailed description is provided only to describe embodiments of the present disclosure and not for purposes of limitation. Unless the context clearly indicates otherwise, the singular forms include the plural forms. It should be understood that the terms "comprises" or "includes" specify some features, numbers, steps, operations, elements, and/or combinations thereof when used herein, but do not preclude the presence or possibility of one or more other features, numbers, steps, operations, elements, and/or combinations thereof in addition to the description.

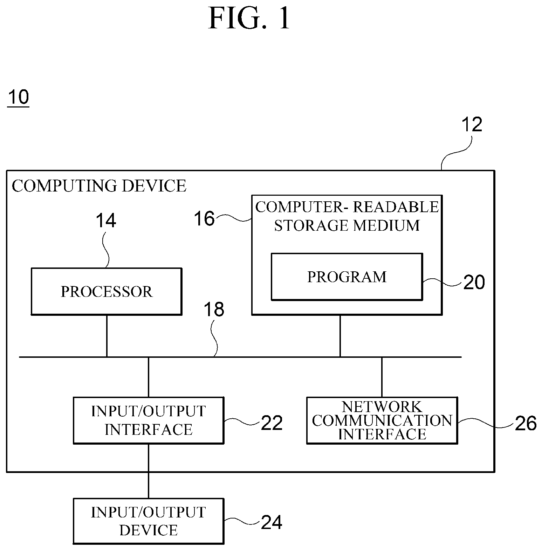

FIG. 1 is a block diagram illustrating an example of a computing environment 10 including a computing device suitable for use in example embodiments. In the illustrated embodiment, each of the components may have functions and capabilities different from those described hereinafter and additional components may be included in addition to the components described herein.

The illustrated computing environment 10 includes a computing device 12. In one exemplary embodiment, the computing device 12 may be an apparatus for executing a method of searching for an object for executing an automation scenario according to an exemplary embodiment.

The computing device 12 includes at least one processor 14, a computer-readable storage medium 16, and a communication bus 18. The processor 14 may cause the computing device 12 to operate according to the above-described exemplary embodiment. For example, the processor 14 may execute one or more programs stored in the computer-readable storage medium 16. The one or more programs may include one or more computer executable instructions, and the computer executable instructions may be configured to, when executed by the processor 14, cause the computing device 12 to perform operations according to an exemplary embodiment.

The computer-readable storage medium 16 is configured to store computer executable instructions and program codes, program data and/or information in other suitable forms. The programs stored in the computer-readable storage medium 16 may include a set of instructions executable by the processor 14. In one exemplary embodiment, the computer-readable storage medium 16 may be a memory (volatile memory, such as random access memory (RAM), nonvolatile memory, or a combination thereof), one or more magnetic disk storage devices, optical disk storage devices, flash memory devices, storage media in other forms capable of being accessed by the computing device 12 and storing desired information, or a combination thereof.

The communication bus 18 interconnects the various other components of the computing device 12, including the processor 14 and computer readable storage medium 16.

The computing device 12 may include one or more input/output interfaces 22 for one or more input/output devices 24 and one or more network communication interfaces 26. The input/output interface 22 and the network communication interface 26 are connected to the communication bus 18. The input/output device 24 may be connected to other components of the computing device 12 through the input/output interface 22. The illustrative input/output device 24 may be a pointing device (a mouse, a track pad, or the like), a keyboard, a touch input device (a touch pad, a touch screen, or the like), an input device, such as a voice or sound input device, various types of sensor devices, and/or a photographing device, and/or an output device, such as a display device, a printer, a speaker, and/or a network card. The illustrative input/output device 24 which is one component constituting the computing device 12 may be included inside the computing device 12 or may be configured as a separate device from the computing device 12 and connected to the computing device 12.

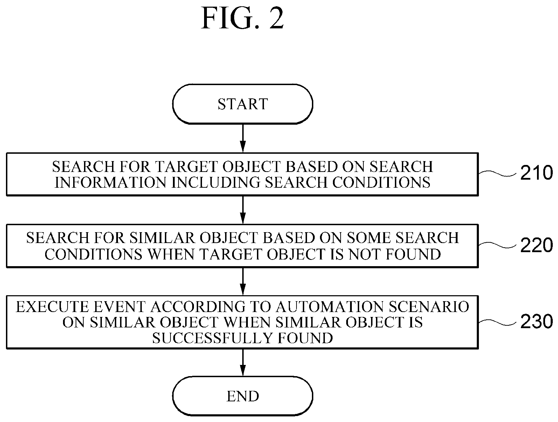

FIG. 2 is a flowchart illustrating a method of searching for an object for executing an automation scenario according to an exemplary embodiment. The method shown in FIG. 2 may be performed by, for example, the above-described computing device 12.

In operation 210, the computing device 12 searches for a target object based on search information including a plurality of search conditions for the target object that is a target of an event according to an automation scenario.

Hereinafter, an "automation scenario" refers to a set of information generated and provided by software that provides a robotic process automation (RPA) function so that a software robot can autonomously perform simple repetitive tasks (e.g., receiving and sending emails, filling out document forms, etc.) that are originally performed by a user on a user interface (UI). In this case, the software that provides the RPA function may be executed by the computing device 12 described above, but is not necessarily limited thereto. The above-described computing device 12 may obtain an automation scenario previously stored in a separate scenario database (not shown) and perform the object search method described below.

In addition, hereinafter, an "event" refers to an action or task that can be detected and processed by a series of programs in the process of executing the automation scenario, and a "target object" refers to an object that is preset to be a target of an event on the UI according to the automation scenario. For example, if the event according to the automation scenario is a click on an "OK button" on the UI, the "OK button" is the target object.

In addition, hereinafter, a "search condition" refers to at least one of a variable to be used when searching for the existence of a specific object in the UI and a value assigned to the variable.

According to an exemplary embodiment of the present invention, the search condition includes a plurality of attributes to be used for searching for a target object, an attribute value of each of the plurality of attributes, and a weight for each of the plurality of attributes.

Specifically, an "attribute" for an object refers to various types of information representing an object. For example, the attribute may include object name, class name corresponding to an object, object size, object identification information (ID) corresponding to an object, object position on the UI, object hierarchy, and the like.

On the other hand, a "weight" corresponding to an attribute of an object is a numerical value in percentage that indicates a ratio by which each attribute is considered when searching for the existence of a specific object in the UI, and the sum of the weights corresponding to each of all the attributes to be used for the search for a target object becomes 100%.

According to an exemplary embodiment, initial search conditions for searching for a target object may be pre-stored in a separate condition database (not shown). For example, the pre-stored initial search conditions for searching for target object A may include 5 attributes of "name," "class name," "object ID," "object size," and "object position" and weights of "30%," "25%," " 20%," "15%," and "10%" corresponding to the respective attributes.

In operation 220, when the target object is not found, the computing device 12 searches for a similar object for the target object based on some of a plurality of search conditions used for searching for the target object.

Hereinafter, a "similar object" refers to an object that is set to be a new target of an event on the UI according to an automation scenario when the target object is not found.

According to an exemplary embodiment, the computing device 12 may determine that an object that is not a target object and satisfies some of the plurality of search conditions used for searching for the target object is a similar object.

In this case, a process in which the computing device 12 determines the found object as a similar object is as follows.
1) When a found object other than the target object exists, the computing device 12 determines, one by one, whether an attribute value assigned to each attribute used for searching for a similar object matches an attribute value assigned to each of the plurality of attributes for the searched object.
   For example, it is assumed that four attributes of "name," "class name," "object ID," and "object size" are used to search for a similar object. In this case, the computing device 12 determines whether attribute values assigned to each of these four attributes match attribute values assigned to each of the attributes ("name," "class name," "object ID," and "object size") of the found object other than the target object, respectively.
2) When it is determined that the attribute values for all of the attributes used for searching for the similar object match the attribute values for the found object, the computing device 12 determines that the found object is the similar object.

According to the present invention, when the target object is found, the computing device 12 executes an event according to an automation scenario on the found target object. This is a case where a previously generated and provided automation scenario is normally executed, and in this case, the computing device 12 may not search for a similar object.

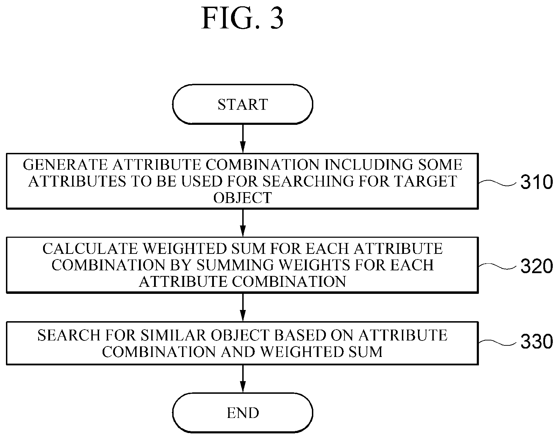

A specific description will be given of operation 220 with reference to FIGS. 3 to 5 below.

In operation 230, when the similar object is successfully found, the computing device 12 executes an event according to an automation scenario on the similar object.

For example, in a case where a target object is an "OK button" but the "OK button" is not found in the UI, if a "YES button" is found as a similar object, an event according to an automation scenario may be changed from "click on an OK button on the UI" to "click on a YES button on the UI" and then the changed event may be executed.

FIG. 3 is a flowchart for describing in detail an operation of searching for a similar object according to an exemplary embodiment. The method shown in FIG. 3 may be performed by, for example, the above-described computing device 12.

In operation 310, the computing device 12 generates a plurality of attribute combinations including some of a plurality of attributes for a target object.

According to an embodiment of the present invention, the computing device 12 generates a plurality of attribute combinations to include all of a plurality of attributes for a target object except for one attribute, but the method of generating the attribute combinations is not limited thereto. The computing device 12 generates a plurality of attribute combinations to include all of the plurality of attributes for the target object except for a preset number of attributes.

For example, when attributes used for searching for the target object are "name," "class name," "object ID," "object size," and "object position," the computing device may generate a total of five attribute combinations such that each attribute combination includes four attributes among the five attributes. The attribute combinations include an attribute combination consisting of "class name," "object ID," "object size," and "object position," an attribute combination consisting of "name," "object ID," "object size," and "object position," an attribute combination consisting of "name," "class name," "object size," and "object position," an attribute combination consisting of "name," "class name," "object ID," and "object position," and an attribute combination consisting of "name," "class name," "object ID," and "object size".

In operation 320, the computing device 12 calculates the weighted sums for each of the plurality of attribute combinations by summing the weights for each of the plurality of attributes for each of the plurality of attribute combinations.

For example, if weights corresponding to each of the five attributes of "name," "class name," "object ID," "object size," and "object position" are "30%," "25%," "20%," "15%," "10%," respectively, the sums of weights for each of the five attribute combinations may be calculated as "70%," "75%," "80%," "85%," and "90%," respectively.

In operation 330, the computing device 12 searches for a similar object based on the plurality of attribute combinations and the calculated sums of the weights.

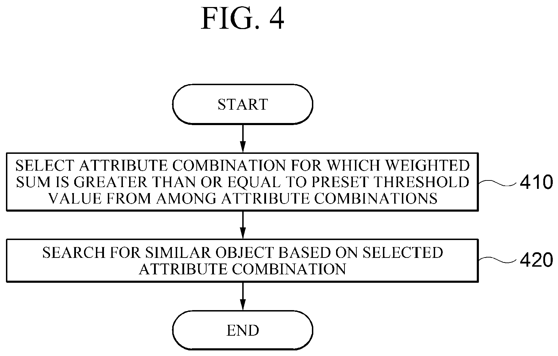

FIG. 4 is a flowchart for describing in detail an operation of searching for a similar object based on an attribute combination and the weighted sum according to the present invention. The method shown in FIG. 4 may be performed by, for example, the above-described computing device 12.

In operation 410, the computing device 12 selects, from among a plurality of attribute combinations, one or more attribute combinations for which the calculated sum of weights is greater than or equal to a preset threshold value.

For example, when the preset threshold value is 80%, the computing device 12 may select the attribute combinations corresponding to the sum of weights of "80%," "85%," and "90%" among the sums of weights calculated for each of the five attribute combinations in operation 320.

In other words, the computing device 12 selects a combination of attributes that are given more consideration when searching for the target object. Since the attribute that is given relatively more consideration when searching for a target object is important information representing the target object, the selected attribute combination may be a combination of relatively important information for specifying the target object.

In operation 420, the computing device 12 searches for a similar object based on one or more selected attribute combinations.

Accordingly, the computing device 12 may search for a similar object based on information that is relatively important for specifying the target object, thereby finding a similar object that shares important characteristics with the target object.

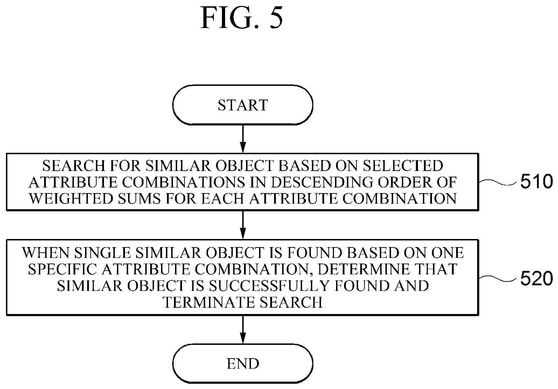

FIG. 5 is a flowchart for describing in detail an operation of searching for a similar object based on one or more selected attribute combinations according to an exemplary embodiment. The method shown in FIG. 5 may be performed by, for example, the above-described computing device 12.

In operation 510, the computing device 12 may search for a similar object based on one or more selected attribute combinations in descending order of the sums of weights for each of the one or more selected attribute combinations.

For example, the computing device 12 may search for a similar object by using, as a first priority, the attribute combination corresponding to a weighted sum of 90% among the one or more attribute combinations selected in operation 410, using the attribute combination corresponding to a weighted sum of 85% as a second priority, and lastly using the attribute combination corresponding to a weighted sum of 80%.

According to an exemplary embodiment, when the result of performing operation 410 shows that two or more attribute combinations having the same weighted sum exist, the computing device 12 may determine an order in which the attribute combinations are to be used for searching for a similar object based on the weight for each of the attributes that are not included in each of the attribute combinations having the same weighted sum.

For example, it is assumed that, when there are attribute combinations A and B that have the same weighted sum of 80%, attributes that are not included in A among the plurality of attributes to be used for searching for the target object are x and y, the weights for attributes x and y are "5%" and "15%," respectively, an attribute that is not included in B is z, and the weight for z is "20%".

In this case, the computing device 12 may search for a similar object by preferentially using A, which is an attribute combination that does not include x to which the lowest weight of "5%" is assigned.

According to an exemplary embodiment, when a unique similar object is found based on a specific attribute combination, the computing device 12 may determine that the similar object has been successfully found and may terminate the search for the similar object. In this case, subsequent attribute combinations subsequent in sequence to the specific attribute combination are not used to search for a similar object.

Meanwhile, according to an exemplary embodiment, when the result of searching for a similar object using the specific attribute combination shows that no similar object exists or two or more similar objects are found, the computing device 12 determines that the search for a similar object using the specific attribute combination has failed, and may search for a similar object using a subsequent attribute combination subsequent in sequence to the specific attribute combination.

In operation 520, when a single similar object is found based on a specific attribute combination among the one or more selected attribute combinations, the computing device 12 may determine that the similar object has been successfully found, and terminate the search.

For example, the computing device 12 may search for a similar object using each of three attribute combinations classified in operation 410 described above. In this case, when a similar object is found using the second attribute combination, the computing device 12 may determine that the similar object has been successfully found and terminate the search without carrying out the search using the third attribute combination. In this case, the computing device 12 may then perform operation 230 described above.

In the flowchart illustrated in FIGS. 2 to 5, at least some of the operations may be performed in different order or may be combined into fewer operations or further divided into more operations. In addition, some of the operations may be omitted, or one or more extra operations, which are not illustrated, may be added to the flowchart and be performed.

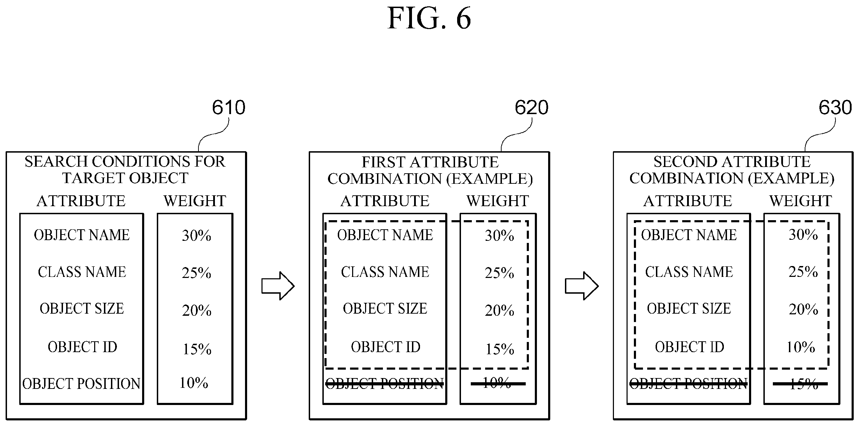

FIG. 6 is an exemplary diagram for describing an attribute combination generated according to an exemplary embodiment. The method shown in FIG. 6 may be performed by, for example, the above-described computing device 12.

First, five attributes (object name, class name, object size, object ID, and object position) to be used for searching for a target object among search conditions for searching for the target object and weights for each attribute are displayed on a box 610 shown on the left side of FIG. 6.

When the target object is not found, the computing device 12 may select an attribute combination including four attributes (object name, class name, object size, and object ID) among the five attributes as shown in an example displayed in a box 620 illustrated in the center of FIG. 6. In this case, the selected attribute combination is an attribute combination having the largest sum of weights among the attribute combinations that can be generated by selecting any four of the five illustrated attributes.

When a similar object is not found even based on the attribute combination displayed in the box 620, the computing device 12 may select an attribute combination including other four attributes (object name, class name, object size, and object position) as shown in an example displayed in the box 630 illustrated in the right side of FIG. 6. In this case, the selected attribute combination is an attribute combination having the second largest sum of weights among the attribute combinations that can be generated by selecting any four of the five illustrated attributes.

In this way, the computing device 12 may select a different attribute combination in descending order of the weighted sum and search for a similar object based on the selected attribute combination.

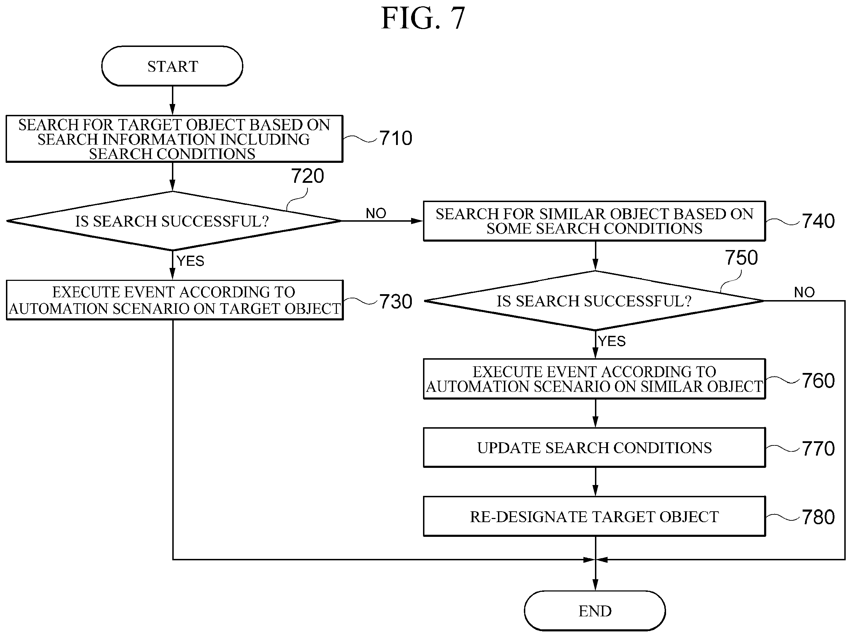

FIG. 7 is a flowchart illustrating a method of searching for an object for executing an automation scenario according to an additional embodiment. The method shown in FIG. 7 may be performed by, for example, the above-described computing device 12.

In operation 710, the computing device 12 may search for a target object based on search information including a plurality of search conditions for a target object that is a target for which an event is to be executed according to an automation scenario.

In operation 720, the computing device 12 may determine whether a target object is found.

In operation 730, when the target object is successfully found, the computing device 12 may execute an event according to the automation scenario on the target object.

**In** operation 740, when the target object is not found, the computing device 12 may search for a similar object of the target object based on some of the plurality of search conditions.

**In** operation 750, the computing device 12 may determine whether a similar object is found.

**In** operation 760, when a similar object is successfully found, the computing device 12 may execute an event according to an automation scenario on the similar object.

According to an exemplary embodiment, when the similar object is not found, the computing device 12 may terminate the object search method for executing an automation scenario.

**In** operation 770, after the event according to the automation scenario is executed on the similar object, the computing device 12 may update a plurality of search conditions for the target object.

According to an exemplary embodiment, the computing device 12 may update the plurality of search conditions for the target object by storing new search conditions in a separate condition database (not shown).

In an exemplary embodiment, the computing device 12 may update weights for each of a plurality of attributes to be used for searching for the target object.

Specifically, when the similar object is successfully found, the computing device 12 determines whether to update the weights for attributes that are not used for searching for the similar object among the plurality of attributes to be used for searching for the target object, thereby providing a user with a more improved search result in future search for a similar object.

According to an exemplary embodiment, the computing device 12 may update a weight for an attribute having an attribute value that matches an attribute value of each of a plurality of attributes for a similar object among the attribute values of each of the plurality of attributes to be used for searching for the target object.

For example, it is assumed that a similar object has been successfully found using an attribute combination of "name," "class name," and "object ID" among the attribute combinations generated in operation 310 described above.

In this case, the computing device 12 may determine whether or not attribute values for "name," "class name," "object ID," and "object position" to be used for searching for a target object match attribute values for "name," "class name," "object ID," and "object position" of the found similar object.

Since the attribute values for "name," "class name," and "object ID," which are used for searching for the similar object, match the attribute values for "name," "class name," and "object ID" of the found similar object, the computing device 12 determines whether or not the attribute values for "object size" and "object position" to be used for searching for the target object match the attribute values for "object size" and "object position" of the found similar object.

Subsequently, when the attribute values for "object size" match each other while the attribute values for "object position" do not match, the computing device 12 may increase a weight for "object size" to be used for searching for the target object.

According to an exemplary embodiment, the computing device 12 may increase the weight by increasing a value of a variable representing the weight by a preset value. Here, the variable representing the weight may not be in percentage, but may have a separate value.

For example, it is assumed that attributes of "name," "class name," "object ID," "object size," and "object position" are used to search for a target object and, among these attributes, "name," "class name," "object ID," and "object size" each have an attribute value that matches an attribute value of the respective corresponding attribute for a similar object.

In this case, if weights for the five attributes are "30%," "25%," "20%," "15%," and "10%," respectively, and values of variables representing the respective weights are also "30," "25," "20," "15," and "10," respectively, the computing device (12) may update the values of the variables representing the weights for the five respective attributes to "31," "26," "21," "16," and "10" by incrementing each value by 1, and accordingly, the weights for the five respective attributes may be updated to "29.808%," "25%," "20.192%," "15.385%," and "9.615%" when rounded to three decimal places.

In operation 780, the computing device 12 may re-designate a target object.

According to an exemplary embodiment, when the similar object is successfully found, the computing device 12 may re-designate the found similar object as a new target object.

In this case, the computing device 12 may allow software providing a robotic process automation (RPA) function to generate an automation scenario that reflects the new target object, but the exemplary embodiment is not necessarily limited thereto, and the computing device 12 may update the automation scenario by storing the automation scenario that reflects the new target object in a separate scenario database (not shown).

According to another embodiment, when the similar object is successfully found, the computing device 12 may provide the user with a query on whether to re-designate the found similar object as a new target object, and determine whether to re-designate the found similar object as the new target object according to the user's response to the query.

In the illustrated flowchart, at least some of the operations may be performed in different order or may be combined into fewer operations or further divided into more operations. In addition, some of the operations may be omitted, or one or more extra operations, which are not illustrated, may be added to the flowchart and be performed.

According to the disclosed embodiments, even when a target object is not found, a similar object is found based on some search conditions, so that rapid business automation can be implemented without stopping the execution of an automation scenario.

In addition, according to the disclosed embodiments, search conditions for executing an automation scenario are autonomously updated without the need to analyze the causes of errors resulting in failure in object search, so that it is possible to prevent additional errors resulting from an incorrect analysis of the causes of errors.

The methods and/or operations described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A method of searching for an object for executing an automation scenario, which is performed by a computing device (12) comprising one or more processors (14) and a memory (16) in which one or more programs (20) to be executed by the one or more processors (14) are stored, the method comprising:
searching (210) for a target object based on search information including a plurality of search conditions (610) for the target object that is a target for which an event is to be executed according to an automation scenario, wherein the search conditions (610) comprise a plurality of attributes to be used for searching for the target object, attribute values of each of the plurality of attributes, and weights for each of the plurality of attributes;
searching (220) for a similar object for the target object based on some of the plurality of search conditions (610) when the target object is not found; and
executing (230) the event on the similar object when the similar object is successfully found, **characterised in that** the searching (220) for the similar object comprises:
generating (310) a plurality of attribute combinations including some of the plurality of attributes;
calculating (320) weighted sums for each of the plurality of attribute combinations by summing the weights for each of the plurality of attribute combinations;
searching (330) for the similar object based on the plurality of attribute combinations and the weighted sums, further comprising:
selecting (410), from among the plurality of attribute combinations, one or more attribute combinations for which the weighted sum is greater than or equal to a preset threshold value; and
searching (420) for the similar object based on the one or more attribute combinations.

2. The method of claim 1, wherein the searching (220) for the similar object based on the one or more attribute combinations comprises:
searching (510) for the similar object based on the one or more attribute combinations in descending order of the weighted sums for each of the one or more attribute combinations; and
determining (520) that the similar object has been successfully found and terminating the search when a single similar object is found based on an attribute combination corresponding to a certain order among the one or more attribute combinations.

3. The method of claim 1, further comprising updating (770) the plurality of search conditions (610) when the similar object is successfully found.

4. The method of claim 3, wherein the updating (770) comprises updating weights for each of a plurality of attributes to be used for searching for the target object.

5. The method of claim 3, wherein the updating (770) comprises updating, among the attribute values of each of the plurality of attributes for the target object, a weight for an attribute having an attribute value that matches an attribute value of each of a plurality of attributes for the similar object.

6. An apparatus comprising:
one or more processors (14); and
a memory (16) storing one or more programs (20) configured to be executed by the one or more processors (14),
wherein the programs (20) comprise commands for
searching (210) for a target object based on search information including a plurality of search conditions (610) for the target object that is a target for which an event is to be executed according to an automation scenario, wherein the plurality of search conditions (610) comprise a plurality of attributes to be used for searching for the target object, attribute values of each of the plurality of attributes, and weights for each of the plurality of attributes,
searching (220) for a similar object for the target object based on some of the plurality of search conditions (610) when the target object is not found, and
executing (230) the event on the similar object when the similar object is successfully found,
**characterised in that** the searching (220) for the similar object comprises:
generating (310) a plurality of attribute combinations including some of the plurality of attributes;
calculating (320) weighted sums for each of the plurality of attribute combinations by summing the weights for each of the plurality of attribute combinations;
searching (330) for the similar object based on the plurality of attribute combinations and the weighted sums, further comprising:
classifying (410), from among the plurality of attribute combinations, one or more attribute combinations for which the weighted sum is greater than or equal to a preset threshold value; and
searching (420) for the similar object based on the one or more attribute combinations.

7. The apparatus of claim 6, wherein the searching (220) for the similar object based on the one or more attribute combinations comprises:
searching (510) for the similar object based on the one or more attribute combinations in descending order of the weighted sums for each of the one or more attribute combinations; and
determining (520) that the similar object has been successfully found and terminating the search when a single similar object is found based on an attribute combination corresponding to a certain order among the one or more attribute combinations.

8. The apparatus of claim 6, wherein the program further comprises commands for updating (770) the plurality of search conditions when the similar object is successfully found.

9. The apparatus of claim 8, wherein the updating (770) comprises updating weights for each of a plurality of attributes to be used for searching for the target object, and/or wherein the updating (770) comprises updating, among the attribute values of each of the plurality of attributes for the target object, a weight for an attribute having an attribute value that matches an attribute value of each of a plurality of attributes for the similar object.

## Patentansprüche

1. Ein Verfahren zum Suchen eines Objekts zum Ausführen eines Automatisierungsszenarios, das von einer Rechenvorrichtung (12) durchgeführt wird, die einen oder mehrere Prozessoren (14) und einen Speicher (16) umfasst, in dem ein oder mehrere Programme (20), die von dem einen oder den mehreren Prozessoren (14) auszuführen sind, gespeichert sind, wobei das Verfahren umfasst:
Suchen (210) nach einem Zielobjekt auf der Basis von Suchinformationen, die eine Vielzahl von Suchbedingungen (610) für das Zielobjekt aufweisen, das ein Ziel ist, für das ein Ereignis gemäß einem Automatisierungsszenario ausgeführt werden soll, wobei die Suchbedingungen (610) eine Vielzahl von Attributen aufweisen, die für die Suche nach dem Zielobjekt zu verwenden sind, Attributwerte für jedes der Vielzahl von Attributen und Gewichtungen für jedes der Vielzahl von Attributen;
Suchen (220) nach einem ähnlichen Objekt für das Zielobjekt auf der Basis von einigen der Vielzahl von Suchbedingungen (610), wenn das Zielobjekt nicht gefunden wird; und
Ausführen (230) des Ereignisses auf dem ähnlichen Objekt, wenn das ähnliche Objekt erfolgreich gefunden wird, **dadurch gekennzeichnet, dass** das Suchen (220) nach dem ähnlichen Objekt aufweist:
Erzeugen (310) einer Vielzahl von Attributkombinationen, die einige der Vielzahl von Attributen aufweisen;
Berechnen (320) gewichteter Summen für jede der Vielzahl von Attributkombinationen durch Summieren der Gewichte für jede der Vielzahl von Attributkombinationen;
Suchen (330) nach der ähnlichen Aufgabe, basierend auf der Vielzahl von Attributkombinationen und den gewichteten Summen, weiterhin aufweisend:
Auswählen (410), aus der Vielzahl von Attributkombinationen, einer oder mehrerer Attributkombinationen, für die die gewichtete Summe größer oder gleich einem voreingestellten Schwellenwert ist; und
Suchen (420) nach der ähnlichen Aufgabe auf der Basis der einen oder mehreren Attributkombinationen.

2. Das Verfahren nach Anspruch 1, wobei das Suchen (220) nach der ähnlichen Aufgabe auf der Basis der einen oder mehreren Attributkombinationen aufweist:
Suchen (510) nach der ähnlichen Aufgabe auf der Basis der einen oder mehreren Attributkombinationen in absteigender Reihenfolge der gewichteten Summen für jede der einen oder mehreren Attributkombinationen; und
Bestimmen (520), dass die ähnliche Aufgabe erfolgreich gefunden wurde, und Beenden der Suche, wenn ein einzelnes ähnliches Objekt auf der Basis einer Attributkombination gefunden wird, die einer bestimmten Reihenfolge unter der einen oder den mehreren Attributkombinationen entspricht.

3. Das Verfahren nach Anspruch 1 weist ferner auf, die Vielzahl von Suchbedingungen (610) zu aktualisieren (770), wenn das ähnliche Objekt erfolgreich gefunden wurde.

4. Das Verfahren nach Anspruch 3, wobei das Aktualisieren (770) das Aktualisieren von Gewichtungen für jedes aus einer Vielzahl von Attributen aufweist, die für die Suche nach dem Zielobjekt verwendet werden sollen.

5. Das Verfahren nach Anspruch 3, wobei das Aktualisieren (770) unter den Attributwerten jedes der Vielzahl von Attributen für das Zielobjekt ein Aktualisieren einer Gewichtung für ein Attribut mit einem Attributwert aufweist, der mit einem Attributwert jedes einer Vielzahl von Attributen für das ähnliche Objekt übereinstimmt.

6. Eine Vorrichtung, die aufweist:
einen oder mehrere Prozessoren (14); und
einen Speicher (16), der ein oder mehrere Programme (20) speichert, die so konfiguriert sind, dass sie von dem einen oder den mehreren Prozessoren (14) ausgeführt werden können,
wobei die Programme (20) Befehle aufweisen zum
Suchen (210) nach einem Zielobjekt auf der Basis von Suchinformationen, die eine Vielzahl von Suchbedingungen (610) für das Zielobjekt aufweisen, das ein Ziel ist, für das ein Ereignis gemäß einem Automatisierungsszenario ausgeführt werden soll, wobei die Vielzahl von Suchbedingungen (610) eine Vielzahl von Attributen aufweist, die für die Suche nach dem Zielobjekt zu verwenden sind, Attributwerte für jedes der Vielzahl von Attributen und Gewichtungen für jedes der Vielzahl von Attributen,
Suchen (220) nach einem ähnlichen Objekt für das Zielobjekt auf der Basis von einigen der Vielzahl von Suchbedingungen (610), wenn das Zielobjekt nicht gefunden wird, und
Ausführen (230) des Ereignisses für die ähnliche Aufgabe, wenn die ähnliche Aufgabe erfolgreich gefunden wurde,
**dadurch gekennzeichnet, dass** das Suchen (220) nach der ähnlichen Aufgabe aufweisend ist:
Erzeugen (310) einer Vielzahl von Attributkombinationen, die einige der Vielzahl von Attributen aufweisen;
Berechnen (320) gewichteter Summen für jede der Vielzahl von Attributkombinationen durch Summieren der Gewichte für jede der Vielzahl von Attributkombinationen;
Suchen (330) nach der ähnlichen Aufgabe, basierend auf der Vielzahl von Attributkombinationen und den gewichteten Summen, weiterhin aufweisend:
Klassifizieren (410) von einer oder mehreren Attributkombinationen aus der Vielzahl von Attributkombinationen, für die die gewichtete Summe größer als oder gleich einem voreingestellten Schwellenwert ist; und
Suchen (420) nach der ähnlichen Aufgabe auf der Basis der einen oder mehreren Attributkombinationen.

7. Die Vorrichtung nach Anspruch 6, wobei die Suche (220) nach der ähnlichen Aufgabe auf der Basis der einen oder mehreren Attributkombinationen aufweist:
Suchen (510) nach der ähnlichen Aufgabe auf der Basis der einen oder mehreren Attributkombinationen in absteigender Reihenfolge der gewichteten Summen für jede der einen oder mehreren Attributkombinationen; und
Bestimmen (520), dass die ähnliche Aufgabe erfolgreich gefunden wurde, und Beenden der Suche, wenn ein einzelnes ähnliches Objekt auf der Basis einer Attributkombination gefunden wird, die einer bestimmten Reihenfolge unter der einen oder den mehreren Attributkombinationen entspricht.

8. Die Vorrichtung nach Anspruch 6, wobei das Programm weiterhin Befehle zum Aktualisieren (770) der Vielzahl von Suchbedingungen aufweist, wenn das ähnliche Objekt erfolgreich gefunden wurde.

9. Die Vorrichtung nach Anspruch 8, wobei die Aktualisierung (770) eine Aktualisierung der Gewichte für jedes einer Vielzahl von Attributen aufweist, die für die Suche nach dem Zielobjekt verwendet werden sollen, und/oder
wobei das Aktualisieren (770) das Aktualisieren eines Gewichts für ein Attribut mit einem Attributwert, der mit einem Attributwert von jedem einer Vielzahl von Attributen für das ähnliche Objekt übereinstimmt, unter den Attributwerten von jedem der Vielzahl von Attributen für das Zielobjekt aufweist.

## Revendications

1. Procédé de recherche d'un objet pour l'exécution d'un scénario d'automatisation, qui est exécuté par un dispositif informatique (12) comprenant un ou plusieurs processeurs (14) et une mémoire (16) dans laquelle un ou plusieurs programmes (20) à exécuter par les un ou plusieurs processeurs (14) sont stockés, le procédé comprenant :
rechercher (210) un objet cible sur la base d'informations de recherche incluant une pluralité de conditions de recherche (610) pour l'objet cible qui est une cible pour laquelle un événement doit être exécuté selon un scénario d'automatisation, dans lequel les conditions de recherche (610) comprennent une pluralité d'attributs à utiliser pour la recherche de l'objet cible, des valeurs d'attribut de chacun de la pluralité d'attributs, et des poids pour chacun de la pluralité d'attributs ;
rechercher (220) un objet similaire à l'objet cible sur la base d'une partie de la pluralité de conditions de recherche (610) lorsque l'objet cible n'est pas trouvé ; et
exécuter (230) l'événement sur l'objet similaire lorsque l'objet similaire est trouvé avec succès,
**caractérisé en ce que** la recherche (220) de l'objet similaire comprend :
générer (310) une pluralité de combinaisons d'attributs incluant certains de la pluralité d'attributs ;
calculer (320) des sommes pondérées pour chacune de la pluralité de combinaisons d'attributs en additionnant les poids pour chacune de la pluralité de combinaisons d'attributs ;
rechercher (330) l'objet similaire sur la base de la pluralité de combinaisons d'attributs et
des sommes pondérées, comprenant en outre :
sélectionner (410), parmi la pluralité de combinaisons d'attributs, une ou plusieurs combinaisons d'attributs pour lesquelles la somme pondérée est supérieure ou égale à une valeur seuil prédéfinie ; et
rechercher (420) l'objet similaire sur la base des une ou plusieurs combinaisons d'attributs.

2. Procédé selon la revendication 1, dans lequel la recherche (220) de l'objet similaire sur la base des une ou plusieurs combinaisons d'attributs comprend :
la recherche (510) de l'objet similaire sur la base des une ou plusieurs combinaisons d'attributs dans l'ordre décroissant des sommes pondérées pour chacune des une ou plusieurs combinaisons d'attributs ; et
déterminer (520) que l'objet similaire a été trouvé avec succès et mettre fin à la recherche lorsqu'un seul objet similaire est trouvé sur la base d'une combinaison d'attributs correspondant à un certain ordre parmi les une ou plusieurs combinaisons d'attributs.

3. Procédé selon la revendication 1, comprenant en outre la mise à jour (770) de la pluralité de conditions de recherche (610) lorsque l'objet similaire est trouvé avec succès.

4. Procédé selon la revendication 3, dans lequel la mise à jour (770) comprend la mise à jour des poids pour chacun d'une pluralité d'attributs à utiliser pour la recherche de l'objet cible.

5. Procédé selon la revendication 3, dans lequel la mise à jour (770) comprend la mise à jour, parmi les valeurs d'attribut de chaque pluralité d'attributs pour l'objet cible, d'un poids pour un attribut ayant une valeur d'attribut qui correspond à une valeur d'attribut de chacun d'une pluralité d'attributs pour l'objet similaire.

6. Appareil comprenant :
un ou plusieurs processeurs (14) ; et
une mémoire (16) stockant un ou plusieurs programmes (20) configurés pour être exécutés par les un ou plusieurs processeurs (14),
dans lequel les programmes (20) comprennent des commandes pour
la recherche (210) d'un objet cible sur la base d'informations de recherche incluant une pluralité de conditions de recherche (610) pour l'objet cible qui est une cible pour laquelle un événement doit être exécuté selon un scénario d'automatisation, dans lequel la pluralité de conditions de recherche (610) comprennent une pluralité d'attributs à utiliser pour la recherche de l'objet cible, des valeurs d'attribut de chacun de la pluralité d'attributs, et des poids pour chacun de la pluralité d'attributs,
la recherche (220) d'un objet similaire à l'objet cible sur la base d'une partie de la pluralité de conditions de recherche (610) lorsque l'objet cible n'est pas trouvé, et
l'exécution (230) de l'événement sur l'objet similaire lorsque l'objet similaire est trouvé avec succès,
**caractérisé en ce que** la recherche (220) de l'objet similaire comprend :
générer (310) une pluralité de combinaisons d'attributs incluant certains de la pluralité d'attributs ;
calculer (320) des sommes pondérées pour chacune de la pluralité de combinaisons d'attributs en additionnant les poids pour chacune de la pluralité de combinaisons d'attributs ;
rechercher (330) l'objet similaire sur la base de la pluralité de combinaisons d'attributs et
des sommes pondérées, comprenant en outre :
classer (410), parmi la pluralité de combinaisons d'attributs, une ou plusieurs combinaisons d'attributs pour lesquelles la somme pondérée est supérieure ou égale à une valeur seuil prédéfinie ; et
rechercher (420) l'objet similaire sur la base des une ou plusieurs combinaisons d'attributs.

7. Appareil selon la revendication 6, dans lequel la recherche (220) de l'objet similaire sur la base des une ou plusieurs combinaisons d'attributs comprend :
la recherche (510) de l'objet similaire sur la base des une ou plusieurs combinaisons d'attributs dans l'ordre décroissant des sommes pondérées pour chacune des une ou plusieurs combinaisons d'attributs ; et
déterminer (520) que l'objet similaire a été trouvé avec succès et mettre fin à la recherche lorsqu'un seul objet similaire est trouvé sur la base d'une combinaison d'attributs correspondant à un certain ordre parmi les une ou plusieurs combinaisons d'attributs.

8. Appareil selon la revendication 6, dans lequel le programme comprend en outre des commandes pour mettre à jour (770) la pluralité de conditions de recherche lorsque l'objet similaire est trouvé avec succès.

9. Appareil selon la revendication 8, dans lequel la mise à jour (770) comprend la mise à jour des poids pour chacun d'une pluralité d'attributs à utiliser pour la recherche de l'objet cible, et/ou
dans lequel la mise à jour (770) comprend la mise à jour, parmi les valeurs d'attribut de chacun d'une pluralité d'attributs pour l'objet cible, d'un poids pour un attribut ayant une valeur d'attribut qui correspond à une valeur d'attribut de chaque pluralité d'attributs pour l'objet similaire.
